(19) Europäisches Patentamt
European Patent Office
Office européen des brevets

(11) **EP 4 442 747 A1**

(12) **EUROPEAN PATENT APPLICATION**
published in accordance with Art. 153(4) EPC

(43) Date of publication:
**09.10.2024 Bulletin 2024/41**

(21) Application number: **21966343.2**

(22) Date of filing: **30.11.2021**

(51) International Patent Classification (IPC):
*C08K 5/098* (2006.01)     *C08K 5/42* (2006.01)
*C08K 5/51* (2006.01)     *C08L 101/00* (2006.01)

(52) Cooperative Patent Classification (CPC):
**C08K 5/098; C08K 5/42; C08K 5/51; C08L 101/00**

(86) International application number:
**PCT/JP2021/043924**

(87) International publication number:
**WO 2023/100257 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nisshinbo Holdings Inc.**
**Tokyo 103-8650 (JP)**

(72) Inventors:
• **HASHIBA Toshifumi**
**Chiba-city, Chiba 267-0056 (JP)**
• **HAYAKAWA Kazutoshi**
**Chiba-city, Chiba 267-0056 (JP)**
• **UEMURA Naohiro**
**Chiba-city, Chiba 267-0056 (JP)**
• **MATSUZAKA Erina**
**Chiba-city, Chiba 267-0056 (JP)**

(74) Representative: **Mewburn Ellis LLP**
**Aurora Building**
**Counterslip**
**Bristol BS1 6BX (GB)**

(54) **MARINE BIODEGRADATION PROMOTER HAVING HYDROCARBON GROUP, AND MARINE BIODEGRADABLE COMPOSITION**

(57)     Provided is a marine biodegradation promoter that is a hydrophobic, thermoplastic powder composed of a compound in which ionic bonds bond a metal cation having a valence of two or higher and a monovalent organic anion derived from a substance selected from among monovalent carboxylic acids containing a monovalent hydrocarbon group having 10-25 carbon atoms, monovalent sulfonic acids containing a monovalent hydrocarbon group having 10-25 carbon atoms, monovalent sulfate esters containing a monovalent hydrocarbon group having 10-25 carbon atoms, and monovalent phosphate esters containing a monovalent hydrocarbon group having 10-25 carbon atoms, wherein the powder dissolves in a 3 mass% aqueous sodium chloride solution, or exhibits hydrophilicity in a 3 mass% aqueous sodium chloride solution.

EP 4 442 747 A1

**Description**

TECHNICAL FIELD

The present invention relates to a marine biodegradation promoter having a hydrocarbon group and to a marine biodegradable composition.

BACKGROUND ART

Environmental contamination by microplastics (marine contamination) and the harmful effects of microplastics on ecosystems have become a problem in recent years, and so a variety of efforts to reduce their environmental impact are underway. Noteworthy among these efforts is the development and widespread adoption of biodegradable plastics.

Ordinary biodegradable plastics exhibit a high biodegradability in environments such as soils and sludge where there is an abundance of microorganisms to carry out decomposition. However, decomposition does not readily take place in environments such as the oceans where the concentration of microorganisms is extremely low (Non-Patent Document 1). Even with resins such as polycaprolactone (PCL) and polyhydroxyalkanoates (PHA) for which biodegradability in the oceans has been reported, the rate of decomposition has been found to differ widely depending on the type of seawater and is reportedly affected by a variety of factors, such as the presence/absence and cell count of plastic-degrading bacteria in seawater, and the salinity, pH, water temperature, dissolved oxygen concentration and dissolved organic carbon level of the water (Non-Patent Document 2).

Hence, there exists a desire for the development of materials which reliably decompose in any type of seawater, and materials which are capable of serving as degradation promoters for plastics that do not readily biodegrade in seawater.

PRIOR ART DOCUMENTS

NON-PATENT DOCUMENTS

Non-Patent Document 1: Takada, H.: "Current status of microplastics contamination --International trends and countermeasures," Haikibutsu Shigen Junkan Gakkaishi, Vol. 29, No. 4, pp. 261-269 (2018).
Non-Patent Document 2: Ebisui, A., et al.: "Decomposition of biodegradable plastics in seawater," Suisan Kogaku, Vol., 40, No. 2, pp. 143-149 (2003).

SUMMARY OF INVENTION

TECHNICAL PROBLEM

The present invention was arrived at in light of the above circumstances. The object of this invention is to provide in particular a biodegradation promoter for promoting the biodegradation of plastics and the like in the oceans, and a marine biodegradable composition which includes such a biodegradation promoter.

SOLUTION TO PROBLEM

The inventors have conducted intensive investigations in order to achieve the above objects. As a result, they have discovered that a hydrophobic powder material composed of a compound in which a monovalent organic anion originating from a substance selected from the group consisting of monovalent carboxylic acids having a monovalent hydrocarbon group of 10 to 25 carbon atoms, monovalent sulfonic acids having a monovalent hydrocarbon group of 10 to 25 carbon atoms, monovalent sulfate esters having a monovalent hydrocarbon group of 10 to 25 carbon atoms and monovalent phosphate esters having a monovalent hydrocarbon group of 10 to 25 carbon atoms is ionically bonded with a metal cation having a valence of two or more, in spite of not dissolving in fresh water and being hydrophobic, gradually dissolves or gives rise to hydrophilization in seawater. Unlike ordinary biodegradable plastics, primary decomposition (to smaller molecules) in seawater proceeds not via hydrolysis or biodegradation by enzymes and microorganisms, but rather via molecular cleavage by metal ions such as sodium. Hence, regardless of the type of seawater, this material undergoes stable primary decomposition and is converted to smaller molecules having structures which dissolve in or are compatible with seawater, in this way greatly promoting hydrolysis and degradation by enzymes and microorganisms. The inventors have also found that by using this material in combination with plastics, especially biodegradable plastics, it is the first to incur primary decomposition in seawater and has (1) the effect of forming holes in the plastic material, increasing the specific surface area of the plastic and stimulating the growth of microorganisms which carry out decomposition, and (2) the effect of, owing to primary decomposition, accelerating secondary decomposition, i.e., biodegradation by microorganisms. As a result, the biodegradation of plastic materials in the ocean can be accelerated. This discovery ultimately led to the present invention.

Accordingly, the invention provides the following marine biodegradation promoter having a hydrocarbon group and the following marine biodegradable composition.

1. A marine biodegradation promoter that is a hydrophobic thermoplastic powder composed of a compound in which a monovalent organic anion originating from a substance selected from the group consisting of monovalent carboxylic acids having a monovalent hydrocarbon group of 10 to 25 carbon atoms, monovalent sulfonic acids having a monovalent hydrocarbon group of 10 to 25 carbon atoms, monovalent sulfate esters having a monovalent hydrocarbon group of 10 to 25 carbon atoms and monovalent phosphate esters having a monovalent hydrocarbon group of 10 to 25 carbon atoms is ionically bonded with a metal cation having a valence of two or more, wherein the powder dissolves in a 3 wt% aqueous solution of sodium chloride or exhibits hydrophilicity in a 3 wt% aqueous solution of sodium chloride.

2. The marine biodegradation promoter of 1 above, wherein the monovalent organic anion is from a monovalent carboxylic acid.

3. The marine biodegradation promoter of 2 above, wherein the monovalent carboxylic acid is a monovalent fatty acid having a monovalent hydrocarbon group of 10 to 25 carbon atoms.

4. The marine biodegradation promoter of 3 above, wherein the monocarboxylic acid is capric acid, lauric acid, myristic acid, palmitic acid or stearic acid.

5. The marine biodegradation promoter of 2 above, wherein the monovalent carboxylic acid is an amino acid derivative having a monovalent hydrocarbon group of 10 to 25 carbon atoms.

6. The marine biodegradation promoter of 5 above, wherein the amino acid derivative is a sarcosine derivative having a monovalent hydrocarbon group of 10 to 25 carbon atoms or a glutamic acid derivative having a monovalent hydrocarbon group of 10 to 25 carbon atoms.

7. The marine biodegradation promoter of 6 above, wherein the amino acid derivative is lauroyl sarcosine, myristoyl sarcosine, palmitoyl sarcosine, myristoyl glutamate or stearoyl glutamate.

8. The marine biodegradation promoter of any of 1 to 7 above, wherein the monovalent organic anion is one that does not include a cyclic structure.

9. The marine biodegradation promoter of any of 1 to 8 above, wherein the monovalent organic anion is one that includes an amide group.

10. The marine biodegradation promoter of any of 1 to 9 above, wherein the metal cation is a calcium ion, magnesium ion or aluminum ion.

11. The marine biodegradation promoter of any of 1 to 10 above which is a powder having an average particle size of from 0.1 to 10,000 $\mu$m.

12. The marine biodegradation promoter of any of 1 to 11 above which is a thermoplastic powder having a melting temperature of between 60°C and 230°C.

13. The marine biodegradation promoter of any of 1 to 12 above, wherein a melt-molded body of particles of the powder has a contact angle 30 seconds after a water droplet is dropped thereon of 50° or more.

14. A marine biodegradable resin composition which includes the marine biodegradation promoter of any of 1 to 13 above and a resin.

15. The marine biodegradable resin composition of 14 above, wherein the resin is a biodegradable resin.

16. The marine biodegradable resin composition of 14 or 15 above, wherein the content of the marine biodegradation promoter is from 3 to 50 wt% and the content of the biodegradable resin is from 50 to 97 wt%.

17. A molded body obtained from the marine biodegradable resin composition of any of 14 to 16 above.

ADVANTAGEOUS EFFECTS OF INVENTION

Because the marine biodegradation promoter of the invention dissolves or hydrophilizes in seawater, the biodegradation within the ocean of compositions and molded bodies containing the promoter is accelerated, making the promoter useful as a measure for controlling marine pollution. Environmentally friendly compositions and molded bodies can be obtained by using the marine biodegradation promoter of the invention.

BRIEF DESCRIPTION OF DRAWINGS

[FIG. 1] FIG. 1 shows a scanning electron micrograph (500×) taken after immersing the film from Example 5-2 in water for 45 days.

[FIG. 2] FIG. 2 shows a scanning electron micrograph (500×) taken after immersing the film from Example 5-2 in a 3 wt% aqueous solution of sodium chloride for 45 days.

[FIG. 3] FIG. 3 shows a scanning electron micrograph (2,000×) taken after immersing the film from Example 6-3 in water for 45 days.

[FIG. 4] FIG. 4 shows a scanning electron micrograph (2,000×) taken after immersing the film from Example 6-3 in a 3 wt% aqueous solution of sodium chloride for 45 days.

## DESCRIPTION OF EMBODIMENTS

[Marine Biodegradation Promoter]

The marine biodegradation promoter of the invention is a hydrophobic thermoplastic powder composed of a compound (sometimes referred to below as a "hydrophobizing compound") in which a monovalent organic anion originating from a substance selected from the group consisting of monovalent carboxylic acids having a monovalent hydrocarbon group of 10 to 25 carbon atoms, monovalent sulfonic acids having a monovalent hydrocarbon group of 10 to 25 carbon atoms, monovalent sulfate esters having a monovalent hydrocarbon group of 10 to 25 carbon atoms and monovalent phosphate esters having a monovalent hydrocarbon group of 10 to 25 carbon atoms is ionically bonded with a metal cation having a valence of two or more.

Taking into account the melting temperature of the powder, the degree of hydrophobization and safety concerns such as irritancy, the monovalent hydrocarbon group is a group having preferably 12 to 25 carbon atoms, more preferably 14 to 25 carbon atoms, and most preferably 14 to 20 carbons. When the number of carbon atoms is fewer than 10, the melting temperature is too high and molten mixture with the subsequently described resin becomes difficult. On the other hand, when the number of carbon atoms is greater than 25, the melting temperature may decrease.

The monovalent organic anion is preferably one that originates from the above monovalent carboxylic acids or monovalent sulfonic acids, and more preferably one that originates from the above monovalent carboxylic acids. The monovalent carboxylic acids are preferably fatty acids having a monovalent hydrocarbon group of 10 to 25 carbon atoms or amino acid derivatives having a monovalent hydrocarbon group of 10 to 25 carbon atoms. These monovalent organic anions are preferable because of their ability to easily collect fungi that are scarce in the oceans.

From the standpoint of promoting biodegradability, it is preferable for the monovalent organic anion to not include a cyclic structure. However, to impart physical properties, a cyclic structure may be introduced within a range that does not detract from the biodegradability and the regulation thereof.

The monovalent organic anion is preferably one having an amide group or a carboxylic anhydride ring-opened group (e.g., $-C(=O)-CH_2-CH_2-C(=O)-$ (succinic acid), $-C(=O)-CH=CH-C(=O)-$ (maleic acid), $-C(=O)-C_6H_4-C(=O)-$ (phthalic acid)).

Non-limiting examples of the metal cation having a valence of two or more include the magnesium ion, calcium ion, aluminum ion, strontium ion, barium ion, radium ion, scandium ion, titanium ion, vanadium ion, chromium ion, manganese ion, iron ion, cobalt ion, nickel ion, copper ion, zinc ion, yttrium ion, zirconium ion, niobium ion, molybdenum ion, technetium ion, ruthenium ion, rhodium ion, palladium ion, silver ion, cadmium ion, lead ion, platinum ion and gold ion. Of these, the calcium ion, magnesium ion, aluminum ion, zinc ion, iron ion, copper ion and barium ion are preferred. In terms of safety, the calcium ion, magnesium ion and aluminum ion are preferred. In terms of the environment, the calcium ion and the magnesium ion are more preferred, and the calcium ion is most preferred.

The powder composed of the hydrophobizing compound dissolves in a 3 wt% aqueous solution of sodium chloride, or exhibits hydrophilicity in a 3 wt% aqueous solution of sodium chloride.

The powder composed of the hydrophobizing compound is such that, letting SD1 be the percent transmittance of 560 nm wavelength light by a dispersion 15 days after preparation by dispersing the powder in a 3 wt% aqueous solution of sodium chloride to a concentration of 0.1 wt% and letting WD1 be the percent transmittance of 560 nm wavelength light by a dispersion 15 days after preparation by dispersing the marine biodegradation promoter in water to a concentration of 0.1 wt%, the ratio WD1/SD1 is preferably 0.9 or less, more preferably 0.8 or less, and even more preferably 0.6 or less. At 0.9 or less, the shapes of the marine biodegradation promoter particles change and an increase in clarity as the particles dissolve can be confirmed. The lower limit for WD1/SD1, although not particularly limited, is generally about 0.1. From the standpoint of concerns over the environmental impact and also the biodegradation promoting effect, it is preferable for at least the condition WD1/SD1 $\leq$ 0.9 to be satisfied after about 15 days.

In addition, when the powder composed of the hydrophobizing compound is dispersed in, respectively, water or an aqueous solution of sodium chloride (sodium chloride concentration, 3 wt%) to a powder concentration of 0.1 wt%, stirred at room temperature for 15 days and the weight loss ratio (($A-B$)/$A \times 100$ (%)) is subsequently determined from the weight B after drying and the weight A before dispersion, it has a solubility or degree of hydrophilization Z, as determined from Z = S-W, where W is the weight loss ratio in water and S is the weight loss ratio in the aqueous solution of sodium chloride, which is preferably 25 or more, more preferably 50 or more, and even more preferably 60 or more. When Z is 25 or more, the shapes of the marine biodegradation promoter particles change due to the aqueous solution of sodium chloride serving as simulated seawater and it can be confirmed that dissolution or hydrophilization proceeds together with weight loss.

The hydrophobizing compound, when designed out of environmental concerns so as to fully satisfy the need for solubility in water or salt water and for microbial degradability in the environment, has a molecular weight that is preferably 5,000 or less, more preferably from 100 to 5,000, even more preferably from 150 to 3,000, still more preferably from 200 to 2,000, and most preferably from 250 to 1,000. In this invention, the molecular weight refers to the number-average molecular weight (Mn) for the polymer, Mn being a polystyrene-equivalent measured value obtained by gel permeation chromatography. For compounds other than polymers, the molecular weight refers to the formula weight.

The powder composed of the above hydrophobizing compound has an average particle size that is preferably from 0.1 to 10,000 $\mu$m, more preferably from 1.0 to 5,000 $\mu$m, and even more preferably from 3.0 to 3,000 $\mu$m. Of these, in applications where the powder is handled individually as primary particles, the average particle size is preferably from 3.0 to 500 $\mu$m. The average particle size in the invention is the volume mean particle size (MV) determined by the laser diffraction scattering method.

The powder composed of the hydrophobizing compound is a thermoplastic powder which has a melting temperature of between 60°C and 230°C, and preferably between 60°C and 200°C. At a melting temperature within this range, homogeneous mixture can be achieved by heating and melting the powder together with a resin, enabling biodegradation onset in the ocean to arise evenly and efficiently. Homogenization is also desirable from the standpoint of being able to control the variation in physical properties such as strength. The melting temperature is more preferably between 70°C and 180°C, and still more preferably between 90°C and 160°C. In cases where the powder is mixed with a resin, it is preferable to adjust the melting temperature of the powder to the resin melting temperature ±20°C.

The shapes of the powder particles are not particularly limited. For example, the particles may be physically or chemically shape-controlled, having spherical, approximately spherical, flattened or recessed shapes, or may be physically pulverized particles. From the standpoint of the feel, slip characteristics and control of the particle size distribution, particles that are physically or chemically shape-controlled, such as spherical, approximately spherical, flattened or recessed particles, are preferred. Particles composed of the marine biodegradation promoter may be rendered into the shape of pellets by compression molding or melt molding.

When a water droplet is deposited on a melt-molded body of particles of the powder, the contact angle after 30 seconds have elapsed is preferably 50° or more. As used herein, "melt-molded body" refers to a sheet for contact angle measurement that is obtained by heating and melting particles to form a molded body. The hydrophobization effect and the solubility and degradability in seawater are fully exhibited in this case. To readily obtain these advantageous effects, the contact angle is, in order of increasing preference, 60° or more, 70°C or more, or 80°C or more. The contact angle has no particular upper limit, although the practical value is preferably 170° or less, more preferably 160° or less, even more preferably 150° or less, and still more preferably 140° or less. Taking into account the practical hydrophobic effect and the time required for dissolution and biodegradation in seawater, the contact angle preferably satisfies the range of 50° to 160°, more preferably satisfies the range of 50° to 150°, even more preferably satisfies the range of 60° to 140°, and most preferably satisfies the range of 70° to 130°. The contact angle can be measured using a contact angle meter (Drop Master 300, from Kyowa Interface Science Co., Ltd.).

The hydrophobizing compound is obtained by reacting a compound (also referred to below as "Starting Compound A"), which compound consists of a monovalent organic anion originating from a substance selected from the group consisting of monovalent carboxylic acids having a monovalent hydrocarbon group of 10 to 25 carbon atoms, monovalent sulfonic acids having a monovalent hydrocarbon group of 10 to 25 carbon atoms, monovalent sulfate esters having a monovalent hydrocarbon group of 10 to 25 carbon atoms and monovalent phosphate esters having a monovalent hydrocarbon group of 10 to 25 carbon atoms and a monovalent cation, with a polyvalent metal salt containing a metal cation having a valence of two or more, and thereby bonding the monovalent organic anion with the metal cation having a valence of two or more.

The monovalent organic anion is an anion having the carboxylic acid anion (-COO$^-$), sulfonic acid anion (-SO$_3^-$), sulfuric acid anion (-O-SO$_3^-$) or phosphoric acid anion (-P(=O)(OH)-O).

From an environmental standpoint, examples of the monovalent cation include monovalent metal ions such as the hydrogen ion, lithium ion, sodium ion, potassium ion and silver ion; and monovalent organic ions such as the ammonium cation. Of these, from the standpoints of, for example, the environment, biosafety, flexibility and cost, the sodium ion, potassium ion and ammonium cation are preferred, the sodium ion and potassium ion are more preferred, and the sodium ion is even more preferred.

Starting Compound A has a molecular weight of preferably from 100 to 2,500. At a molecular weight within this range, the hot meltability and other properties as a resin and the compatibility with other resins are maintained, and affinity to and decomposition in seawater are easily achieved. The lower limit in the molecular weight is preferably 150 or more, and more preferably 200 or more. The upper limit is preferably 2,000 or less, more preferably 1,500 or less, even more preferably 1,000 or less, and still more preferably 500 or less. In particular, the molecular weight of Starting Compound A is preferably from 150 to 180, more preferably from 150 to 600, and even more preferably from 200 to 500.

Starting Compound A preferably dissolves in water at room temperature or at 80°C or below. Such a compound has a good affinity to seawater, enabling a good rate of biodegradation to be achieved.

Examples of Starting Compound A include monovalent carboxylic acids and salts thereof, monovalent sulfonic acids and salts thereof, monovalent sulfate esters and salts thereof and monovalent phosphate esters and salts thereof.

The monovalent carboxylic acid salt is a salt consisting of an anion from a monovalent carboxylic acid having a monovalent hydrocarbon group of 10 to 25 carbon atoms and a monovalent cation. Preferred monovalent carboxylic acid salts include salts consisting of an anion from a fatty acid having a monovalent hydrocarbon group of 10 to 25 carbon atoms and a monovalent cation and salts consisting of an anion from an amino acid derivative having a monovalent hydrocarbon group of 10 to 25 carbon atoms and a monovalent cation.

Examples of the fatty acid include undecylenic acid, lauric acid, myristic acid, pentadecanoic acid, palmitic acid, palmitoleic acid, margaric acid, stearic acid, isostearic acid, oleic acid, vaccenic acid, ricinolic acid, linoleic acid, linolenic acid, eleostearic acid, oxystearic acid, ricinolic acid, arachidic acid, mead acid, arachidonic acid, eicosapentaenoic acid, behenic acid, docosahexaenoic acid, lignoceric acid, nervonic acid, cerotic acid, coconut oil fatty acid and palm oil fatty acid. Isomers of these having a branched structure are also acceptable.

The fatty acid salt is preferably a monovalent metal salt, specific examples of which include undecylenic acid salts such as potassium undecylenate and sodium undecylenate; lauric acid salts such as potassium laurate and sodium laurate; myristic acid salts such as potassium myristate and sodium myristate; pentadecanoic acid salts such as potassium pentadecanoate and sodium pentadecanoate; palmitic acid salts such as potassium palmitate and sodium palmitate; margaric acid salts such as potassium margarate and sodium margarate; stearic acid salts such as potassium stearate and sodium stearate; isostearic acid salts such as potassium isostearate and sodium isostearate; oleic acid salts such as potassium oleate and sodium oleate; linoleic acid salts such as potassium linoleate and sodium linoleate; linolenic acid salts such as potassium linolenate and sodium linolenate; arachidic acid salts such as potassium arachidate and sodium arachidate; arachidonic acid salts such as potassium arachidonate and sodium arachidonate; behenic acid salts such as potassium behenate and sodium behenate; docosahexaenoic acid salts such as sodium docosahexaenoate; and coconut oil fatty acids such as potassium cocoate and sodium cocoate. Of these, fatty acid salts having a monovalent hydrocarbon group of 10 to 20 carbon atoms, such as lauric acid salts, myristic acid salts, palmitic acid salts, stearic acid salts and arachidic acid salts are preferred. Taking into account the safety to the human body, myristic acid salts, palmitic acid salts, stearic acid salts and arachidic acid salts are best.

The amino acid derivative salt is more preferably one having a monovalent hydrocarbon group of 12 to 25 carbon atoms, and even more preferably one having a monovalent hydrocarbon group of 14 to 20 carbon atoms. The salt of an amino acid derivative is preferably a monovalent salt and more preferably a monovalent metal salt.

Examples of the amino acid derivative include the following derivatives of amino acids having a monovalent hydrocarbon group of 10 to 25 carbon atoms: sarcosine derivatives such as lauroyl sarcosine, myristoyl sarcosine, palmitoyl sarcosine and cocoyl sarcosine; glutamic acid derivatives such as lauroyl glutamic acid, myristoyl glutamic acid, palmitoyl glutamic acid, stearoyl glutamic acid, cocoyl acylglutamic acid, cocoyl glutamic acid, acylglutamic acid and dilauroyl glutamic acid; glycine derivatives such as lauroyl glycine, myristoyl glycine, palmitoyl glycine, palmitoyl methylglycine, cocoyl acylglycine and cocoyl glycine; alanine derivatives such as lauroyl methylalanine, myristoyl methylalanine, cocoyl alanine and cocoyl methylalanine; lysine derivatives such as lauroyl lysine, myristoyl lysine, palmitoyl lysine, stearoyl lysine and oleoyl lysine; aspartic acid derivatives such as lauroyl aspartic acid, myristoyl aspartic acid, palmitoyl aspartic acid and stearoyl aspartic acid; taurine derivatives such as lauroyl taurine, lauroyl methyltaurine, myristoyl taurine, myristoyl methyltaurine, palmitoyl taurine, palmitoyl methyltaurine, stearoyl taurine and stearoyl methyltaurine; and proline derivatives such as lauroyl proline, myristoyl proline and palmitoyl proline. N-acyl derivatives of amino acids are especially preferred. The amino acid derivative is preferably a sarcosine derivative having a monovalent hydrocarbon group of 10 to 25 carbon atoms or a glutamic acid derivative having a monovalent hydrocarbon group of 10 to 25 carbon atoms. Particularly from the standpoint of the melting temperature and safety to the human body, lauroyl sarcosine, myristoyl sarcosine, palmitoyl sarcosine, myristoyl glutamic acid and stearoyl glutamic acid are best.

Examples of the amino acid derivative salt include the following amino acid derivative salts having a hydrocarbon group: sarcosine derivative salts such as potassium lauroyl sarcosinate, sodium lauroyl sarcosinate, potassium myristoyl sarcosinate, sodium myristoyl sarcosinate, potassium palmitoyl sarcosinate, sodium palmitoyl sarcosinate, potassium cocoyl sarcosinate and sodium cocoyl sarcosinate; glutamic acid derivative salts such as potassium lauroyl glutamate, sodium lauroyl glutamate, potassium myristoyl glutamate, sodium myristoyl glutamate, sodium palmitoyl glutamate, potassium palmitoyl glutamate, potassium stearoyl glutamate, sodium stearoyl glutamate, potassium cocoyl acylglutamate, sodium cocoyl acylglutamate, potassium cocoyl glutamate, sodium cocoyl glutamate and sodium dilauroyl glutamate lysine; glycine derivative salts such as potassium lauroyl glycine, sodium lauroyl glycine, potassium myristoyl glycine, sodium myristoyl glycine, sodium palmitoyl glycine, sodium palmitoyl methylglycine, potassium cocoyl acylglycine, sodium cocoyl acylglycine, potassium cocoyl glycine and sodium cocoyl glycine; alanine derivative salts such as potassium lauroyl methylalanine, sodium lauroyl methylalanine, sodium myristoyl methylalanine, sodium cocoyl alanine and sodium cocoyl methylalanine; aspartic acid derivative salts such as potassium lauroyl aspartate, sodium lauroyl aspartate, potassium myristoyl aspartate, sodium myristoyl aspartate, potassium palmitoyl aspartate, sodium palmitoyl aspartate, potassium stearoyl aspartate and sodium stearoyl aspartate; taurine derivative salts such as sodium lauroyl taurate, potassium lauroyl taurate, sodium lauroyl methyltaurate, potassium myristoyl taurate, sodium myristoyl taurate, sodium myristoyl methyltaurate, potassium palmitoyl taurate, sodium palmitoyl taurate, potassium palmitoyl methyltaurate, sodium palmitoyl methyltaurate, potassium stearoyl taurate, sodium stearoyl taurate and sodium stearoyl methyltaurate; and proline derivative salts such as sodium lauroyl proline, sodium myristoyl proline and sodium palmitoyl proline. N-acyl derivative salts of amino acids are especially preferred. Of these, particularly from the standpoint of the melting temperature and safety to the human body, sarcosine derivative salts of lauric acid, myristic acid and palmitic acid, and glutamic acid derivative salts of lauric acid, myristic acid, palmitic acid and stearic acid are best.

The sulfonic acid salt is preferably one having a monovalent hydrocarbon group of 12 to 20 carbon atoms. Also, the sulfonic acid salt is preferably a monovalent salt, and more preferably an ammonium salt or a monovalent metal salt. Specific examples include alkyl sulfonic acid salts such as sodium lauryl sulfonate, ammonium lauryl sulfonate, sodium myristyl sulfonate, ammonium myristyl sulfonate, sodium cetyl sulfonate, ammonium cetyl sulfonate, sodium stearyl sulfonate, ammonium stearyl sulfonate, sodium oleyl sulfonate and ammonium oleyl sulfonate; dodecylbenzene sulfonic acid salts such as ammonium dodecylbenzene sulfonate and sodium dodecylbenzene sulfonate; monoalkyl succinate sulfonic acid salts such as disodium $C_{12-20}$ monoalkyl succinate sulfonates; naphthalene sulfonic acid formalin condensate salts such as sodium salts of naphthalene sulfonic acid formalin condensates; $C_{12-20}$ olefin sulfonic acid salts such as sodium tetradecene sulfonate and ammonium tetradecene sulfonate; isethionic acid salts such as potassium lauroyl isethionate, sodium lauroyl isethionate, sodium myristoyl isethionate, sodium palmitoyl isethionate and sodium stearoyl isethionate; and sulfosuccinic acid salts such as sodium dihexyl sulfosuccinate, sodium dioctyl sulfosuccinate, ammonium dioctyl sulfosuccinate, sodium didecyl sulfosuccinate and sodium diisobutyl sulfosuccinate. Of these, sulfonic acid salts having an alkyl group of 12 to 20 carbon atoms are especially preferred.

Examples of sulfate esters salts include alkyl sulfate ester salts, polyoxyethylene aryl ether sulfate ester salts, polyoxyethylene alkyl ether sulfate ester salts, polyoxyalkylene alkyl ether sulfate ester salts, polyoxyalkylene alkenyl ether sulfate salts and polyoxyethylene castor oil ether sulfate ester salts. The sulfate ester salt is preferably a monovalent salt, and more preferably an ammonium salt or a monovalent metal salt.

The alkyl sulfate ester salt is preferably one having an alkyl group of 12 to 20 carbon atoms. Specific examples include potassium lauryl sulfate, sodium lauryl sulfate, ammonium lauryl sulfate, potassium myristyl sulfate, sodium myristyl sulfate, ammonium myristyl sulfate, sodium cetyl sulfate, ammonium cetyl sulfate, sodium stearyl sulfate, ammonium stearyl sulfate, sodium oleyl sulfate and ammonium oleyl sulfate.

The polyoxyethylene aryl ether sulfate ester salt is preferably one having a hydrophilic-lipophilic balance (HLB) of 16 or less, and more preferably one having an HLB of 12 or less. Examples include polyoxyethylene polycyclic phenyl ether sulfate ester salts such as sodium polyoxyethylene polycyclic phenyl ether sulfate esters and ammonium polyoxyethylene polycyclic phenyl ether sulfate esters; and sodium polyoxyethylene aryl ether sulfate esters.

The polyoxyethylene alkyl ether sulfate ester salt is preferably one having an HLB of 16 or less, and more preferably one having an HLB of 12 or less. Examples include polyoxyethylene alkyl ether sulfate esters, sodium polyoxyethylene lauryl ether sulfate, ammonium polyoxyethylene lauryl ether sulfate, sodium polyoxyethylene myristyl ether sulfate, ammonium polyoxyethylene myristyl ether sulfate, sodium polyoxyethylene cetyl ether sulfate, ammonium polyoxyethylene cetyl ether sulfate, sodium polyoxyethylene stearyl ether sulfate, ammonium polyoxyethylene stearyl ether sulfate, sodium polyoxyethylene oleyl ether sulfate and ammonium polyoxyethylene oleyl ether sulfate.

The polyoxyalkylene alkyl ether sulfate ester salt is preferably one having an HLB of 16 or less, and more preferably one having an HLB of 12 or less. Examples include sulfate ester sodium salts of polyoxyethylene-polyoxypropylene block copolymers, sulfate ester sodium salts of polyoxyethylene-polyoxybutylene block copolymers and sulfate ester sodium salts of alkyl ethers of polyoxyethylene-polyoxypropylene block copolymers. The polyoxyalkylene alkenyl ether sulfate salts are preferably ones having an HLB of 16 or less, and more preferably ones having an HLB of 12 or less. Examples include sulfate ester ammonium salts of alkenyl ethers of polyoxyethylene-polyoxyalkylene block copolymers. The polyoxyethylene castor oil ether sulfate esters and salts thereof are preferably ones having an HLB of 16 or less, and more preferably ones having an HLB of 12 or less. Examples include polyoxyethylene castor oil ether sulfate esters and ammonium polyoxyethylene castor oil ether sulfate esters.

The phosphate ester salts are exemplified by alkyl phosphate ester salts. The alkyl phosphate ester salt is preferably one having an alkyl group of 12 to 20 carbon atoms. Specific examples include decyl phosphate salts such as potassium decyl phosphate, undecyl phosphate salts such as potassium undecyl phosphate; lauryl phosphate salts such as potassium lauryl phosphate, myristyl phosphate salts such as potassium myristyl phosphate, cetyl phosphate salts such as potassium cetyl phosphate and sodium cetyl phosphate, and stearyl phosphate salts such as potassium stearyl phosphate.

Aside from the compounds mentioned above, compounds which consist of a monovalent cation and an anion having a structure obtained by introducing a monovalent anionic substituent selected from the carboxylic acid anion ($-COO^-$), the sulfonic acid anion ($-SO_3^-$), the sulfuric acid anion ($-O-SO_3^-$) and the phosphoric acid anion ($-P(=O)(OH)-O^-$) through a linkage group onto a compound having an active functional group may be used as Starting Compound A. In this invention, the active functional group refers to a functional group capable of inducing a condensation reaction, such as a hydroxyl, amino or carboxyl group.

The compound having an active functional group is preferably a compound having a hydroxyl group, such as a monohydric alcohol, a monovalent amino compound, a (poly)alkylene glycol ether or a (poly)alkylene glycol ester. The monovalent anionic substituent which is introduced onto the active functional group-containing compound is preferably $-COO^-$ because introducing this group is easy.

The monohydric alcohol is an alcohol having a monovalent hydrocarbon group of 10 to 25 carbon atoms and one hydroxyl group, and is preferably an alcohol having 12 to 20 carbon atoms. The monovalent alcohol may be linear, branched or cyclic, although one that is linear is preferred. Specific examples of monohydric alcohols include hexanol, heptanol, octanol, nonanol, decanol, undecanol, dodecanol, tridecanol, tetradecanol, pentadecanol, hexadecanol, heptadecanol, octadecanol, nonadecanol, icosanol, henicosanol, docosanol, tricosanol, tetracosanol, pentacosanol, hexacosanol, heptacosanol, octacosanol, nonacosanol and triacontanol.

The monovalent amino compound is a compound having a monovalent hydrocarbon group of 10 to 25 carbon atoms and a single amino group, and is more preferably a monovalent amino compound having 12 to 20 carbon atoms. The monovalent amino compound may be linear, branched or cyclic, although one that is linear is preferred. Specific examples include aminohexane, aminoheptane, aminooctane, aminononane, aminodecane, aminoundecane, aminododecane, aminotridecane, aminotetradecane, aminopentadecane, aminohexadecane, aminoheptadecane, aminooctadecane, aminononadecane and aminoicosane.

The (poly)alkylene glycol ether is preferably one having an HLB of 16 or less, more preferably one having an HLB of 12 or less, and even more preferably one having an HLB of 8 or less. Specific examples include (poly)alkylene glycol monoalkyl ethers such as (poly)ethylene glycol monododecyl ether, (poly)ethylene glycol monomyristyl ether, (poly)ethylene glycol monocetyl ether, (poly)ethylene glycol monostearyl ether, (poly)ethylene glycol monooleyl ether, (poly)ethylene glycol monobehenyl ether, (poly)propylene glycol monododecyl ether, (poly)propylene glycol monomyristyl ether, (poly)propylene glycol monocetyl ether, (poly)propylene glycol monostearyl ether, (poly)propylene glycol monooleyl ether and (poly)propylene glycol monobehenyl ether; and (poly)alkylene glycol monoaryl ethers such as (poly)ethylene glycol monophenyl ether and (poly)propylene glycol monophenyl ether.

The (poly)alkylene glycol ester is preferably one having an HLB of 16 or less, more preferably one having an HLB of 12 or less, and even more preferably one having an HLB of 8 or less. Specific examples include polyalkylene glycol monofatty acid esters such as (poly)ethylene glycol monolauric acid esters, (poly)ethylene glycol monomyristic acid esters, (poly)ethylene glycol monopalmitic acid esters, (poly)ethylene glycol monostearic acid esters, (poly)ethylene glycol monooleic acid esters, (poly)ethylene glycol monoisostearic acid esters, (poly)ethylene glycol monoarachidic acid esters, (poly)ethylene glycol monobehenic acid esters, (poly)propylene glycol monolauric acid esters, (poly)propylene glycol monomyristic acid esters, (poly)propylene glycol monopalmitic acid esters, (poly)propylene glycol monostearic acid esters, (poly)propylene glycol monooleic acid esters, (poly)propylene glycol monoisostearic acid esters, (poly)propylene glycol monoarachidic acid esters and (poly)propylene glycol monobehenic acid esters; and polyalkylene sorbitan monofatty acid esters such as (poly)ethylene sorbitan monolauric acid esters, (poly)ethylene sorbitan monomyristic acid esters, (poly)ethylene sorbitan monopalmitic acid esters, (poly)ethylene sorbitan monostearic acid esters, (poly)ethylene sorbitan monooleic acid esters, (poly)ethylene sorbitan isostearic acid esters, (poly)ethylene sorbitan monoarachidic acid esters, (poly)ethylene sorbitan monobehenic acid esters, (poly)propylene sorbitan monolauric acid esters, (poly)propylene sorbitan monomyristic acid esters, (poly)propylene sorbitan monopalmitic acid esters, (poly)propylene sorbitan monostearic acid esters, (poly)propylene sorbitan monooleic acid esters, (poly)propylene sorbitan monoisostearic acid esters, (poly)propylene sorbitan monoarachidic acid esters and (poly)propylene sorbitan monobehenic acid esters.

The number-average molecular weight (Mn) of the polyalkylene glycol ether and the (poly)alkylene glycol ester has a lower limit of, in order of increasing preference, 100 or more, 300 or more, 400 or more, or 500 or more; and an upper limit of, in order of increasing preference, 10,000 or less, 6,000 or less, 4,000 or less, 3,000 or less, or 2,000 or less.

The method for introducing a monovalent anionic substituent onto the compound having an active functional group may be, for example, in cases where $-COO^-$ is to be introduced, a method which carries out an esterification reaction between the compound having an active functional group and a dicarboxylic acid anhydride in the presence of a monovalent metal salt, or a method which reacts these with a monovalent metal to form a metal alkoxide and then carries out esterification using a dicarboxylic acid anhydride. The dicarboxylic acid anhydride is preferably succinic anhydride, maleic anhydride or phthalic anhydride. From the standpoint of biodegradability, succinic anhydride and maleic anhydride are more preferred. In cases where $-SO_3^-$ is to be introduced, the method may be, for example, one which reacts a compound having a hydroxyl group or an amino group as the active functional group with $SO_3$ or a $SO_3$·Lewis base complex in an aprotic polar solvent. A tertiary amine, pyridine, DMF or the like may be used as the Lewis base. Acetonitrile or the like is preferred as the aprotic polar solvent. These reactions may be carried out by known methods.

Preferred examples of the hydrophobizing compound include metal soaps such as calcium laurate, magnesium laurate, aluminum laurate, calcium myristate, magnesium myristate, aluminum myristate, calcium palmitate, magnesium palmitate, aluminum palmitate, calcium stearate, magnesium stearate, aluminum stearate, calcium ricinoleate, magnesium ricinoleate and aluminum ricinoleate; N-acylamino acid derivative salts such as calcium myristoyl sarcosinate, magnesium myristoyl sarcosinate, aluminum myristoyl sarcosinate, calcium myristoyl glutamate, magnesium myristoyl glutamate, aluminum myristoyl glutamate, calcium stearoyl glutamate, magnesium stearoyl glutamate and aluminum stearoyl glutamate; sulfonic acid salts such as calcium dodecanesulfonate, magnesium dodecanesulfonate and aluminum dodecanesulfonate; and salt compounds obtained from a calcium salt and the product of propyl glycol monostearate and succinic anhydride esterification in the presence of sodium salt, and salt compounds obtained from a calcium salt and the product of stearyl alcohol and succinic anhydride esterification in the presence of a sodium salt.

[Method for Preparing Hydrophobizing Compound]

Examples of methods for preparing the above hydrophobizing compound include Methods (1) and (2) below.

(1) A method which includes the step of forming a water-in-oil (W/O) emulsion that contains one type of Starting Compound A in water droplets, and the step of carrying out bonding treatment using a polyvalent metal salt (Method 1).
(2) A method which effects settling out or precipitation while carrying out bonding treatment by the dropwise addition of a polyvalent metal salt solution to a medium that dissolves one type of Starting Compound A, or a method which effects settling out or precipitation while carrying out bonding treatment by the dropwise addition of a solution of one type of Starting Compound A to a medium that dissolves a polyvalent metal salt (Method 2).

Method 1 includes the step of forming a W/O emulsion that contains one type of Starting Compound A in water droplets, and the step of carrying out ionic bonding treatment using a polyvalent metal salt.

An example of a W/O emulsion forming method is described. First, a solution of one type of Starting Compound A dissolved in water or a mixed solvent of water and a hydrophilic organic solvent is prepared. If necessary, heating may be carried out at this time. Next, the solution and a hydrophobic organic solvent are mixed together and are then emulsified using an agitator, homogenizer or the like. At the time of mixture, the solution may be added to the hydrophobic organic solvent, or the hydrophobic organic solvent may be added to the solution. A surfactant or a polymeric stabilizer may be dissolved in the hydrophobic organic solvent and used at this time to control the particle size of the water droplets in the W/O emulsion.

Alternatively, as another example of a W/O emulsion forming method, one type of Starting Compound A, a hydrophobizing agent, water, a surfactant, a hydrophobic organic solvent and other necessary ingredients may be charged all at once into a container and emulsified using an agitator, homogenizer or the like.

Heating may be carried out when forming the W/O emulsion. By heating, the solubility can be increased, enabling Starting Compound A to be homogenized and enabling the W/O emulsion to be stabilized. The heating temperature is preferably between 15°C and 100°C, and more preferably between 40°C and 80°C.

After forming the W/O emulsion, ionic bonding treatment is carried out. Bonding treatment may be carried out by adding a polyvalent metal salt-containing solution to the W/O emulsion and stirring. Alternatively, the W/O emulsion may be added to a solution containing the polyvalent metal salt and stirring carried out.

Examples of the polyvalent metal salt include calcium salts, strontium salts, magnesium salts, barium salts, radium salts, lead salts, zinc salts, nickel salts, iron salts, copper salts, cadmium salts, cobalt salts and manganese salts. Calcium salts and magnesium salts are preferred because they are metals which are present in seawater and also for environmental reasons and in terms of safety and flexibility. Specific examples of such polyvalent metal salts include calcium chloride, calcium sulfate, calcium carbonate, calcium hydroxide, calcium oxide, magnesium chloride, magnesium sulfate, magnesium carbonate, magnesium hydroxide and magnesium oxide. In terms of considerations such as solubility in water, handleability and cost, calcium chloride and magnesium chloride are preferred.

The concentration of polyvalent metal salt within the polyvalent metal salt-containing solution is preferably from 1 to 40 wt%, and more preferably from 10 to 30 wt%. Water, lower alcohol-type solvents such as methanol, ethanol, 1-propanol and 2-propanol, and mixed solvents thereof are preferred as the solvent for this solution, although mixed solvents with other organic solvents are also acceptable so long as they can dissolve the salt to the target concentration without dissolving the particles.

Bonding treatment may be carried out while heating, if necessary. Heating may be carried out when adding the polyvalent metal salt-containing solution to the dispersion, may be carried out when stirring following such addition, or may be carried out at both of these times. The heating temperature is preferably between 10°C and 100°C, and more preferably between 40°C and 80°C. The treatment time is preferably from 0.5 to 24 hours, and more preferably from 1 to 12 hours. By heating, the solubility of the hydrophobizing agent can be increased.

Because the aqueous phase of the W/O emulsion includes one type of Starting Compound A and a hydrophobizing agent, by carrying out bonding treatment, hydrophobizing treatment is also carried out at the same time.

After bonding treatment, if necessary, washing and drying of the particles may be carried out to obtain particles consisting of the hydrophobizing compound. Washing may be carried out by an ordinary method such as that of, for example, removing the solvent following bonding treatment, adding water and centrifugation. Drying may be carried out by an ordinary method such as spray drying, vacuum drying or freeze drying. If necessary, the size of the hydrophobizing compound particles thus obtained may be adjusted by carrying out surface treatment or grinding treatment using known equipment.

Method 2 is a method which effects settling out or precipitation while carrying out bonding treatment by the dropwise addition of a polyvalent metal salt solution to a medium that dissolves one type of Starting Compound A, or a method which effects settling out or precipitation while carrying out bonding treatment by the dropwise addition of a solution of one type of Starting Compound A to a medium that dissolves a polyvalent metal salt.

An example of Method 2 is described. First, Solution A is prepared by dissolving one type of Starting Compound A in water or a mixed solvent of water and a hydrophilic organic solvent. If necessary, heating may be carried out at this time in order to increase the solubility. Solution B containing a polyvalent metal salt is added and stirring is carried out. Alternatively, a solution in which of one type of Starting Compound A is dissolved may be added to and stirred with a polyvalent metal salt-containing solution. The polyvalent metal salt-containing solution which is used may be similar to that mentioned above in the description of Method 1.

In this way, bonding treatment can be carried out, and the target hydrophobizing compound which has gradually become insoluble settles out or precipitates. The treatment time is preferably from 0.5 to 24 hours, and more preferably from 1 to 12 hours.

To control the particle size of the settled or precipitated matter, a surfactant or a polymeric stabilizer may be dissolved at this time in either or both of Solutions A and B.

Heating may be carried out when inducing the settling out or precipitation of the target hydrophobizing compound. Such heating may be carried out when mixing together Solution A and Solution B, may be carried out when stirring following such mixture, or may be carried out at both of these times. By heating, the solubility of Starting Compound A can be increased, making it possible to create larger molecules and uniformize the molecular weight distribution due to bonding, and also making it possible to stabilize bonding. The heating temperature is preferably between 15°C and 100°C, and more preferably between 40°C and 80°C.

Following treatment, if necessary, washing and drying of the particles may be carried out to obtain particles of the hydrophobizing compound. Washing may be carried out by an ordinary method such as that of, for example, removing the solvent following bonding treatment, adding water and centrifugation. Drying may be carried out by an ordinary method such as spray drying, vacuum drying or freeze drying. The size of the hydrophobizing compound particles thus obtained may be adjusted by carrying out surface treatment or grinding treatment using known equipment.

[Resin Composition]

By using the marine biodegradation promoter of the invention in combination with a resin, particularly a biodegradable resin, a resin composition having an accelerated biodegradability in the ocean can be obtained. To adjust the properties and handleability of the resin composition, a plurality of resin types may be used in combination. As used herein, "biodegradable resin" refers to a resin which decomposes under the action of microorganisms in the natural world, ultimately breaking down into inorganic matter such as water and carbon dioxide.

Examples of resins that may be combined with the marine biodegradation promoter of the invention include polyethylene, polyester, polypropylene, polyethylene terephthalate, vinyl chloride, polystyrene, polyurethane, epoxy resins, chlorinated polyethylene resins, chlorinated polypropylene resins, modified nylon resins, phenolic resins, silicone resins, polyvinyl acetate, ethylene-vinyl acetate copolymers, polyvinyl chloride, polyvinylidene chloride, styrene-maleic acid resins, styrene-butadiene resins, butadiene resins, acrylonitrile-butadiene resins, poly(meth)acrylonitrile resins, (meth)acrylamide resins, bio-PETs, biopolyamides, biopolycarbonates, biopolyurethanes, polyvinyl alcohol, polybutylene adipate/terephthalate, polyethylene terephthalate succinate, biopolybutylene succinate, poly(lactic acid) blends, starch-blended polyester resins, polybutylene terephthalate succinate, polylactic acid and polyhydroxyalkanoates. From the standpoint of reducing the burden on the environment, resins having a high biodegradability are especially preferred.

Examples of such biodegradable resins include resins for which the raw materials are from petroleum, such as polycaprolactone, poly(caprolactone/butylene succinate), polybutylene succinate (PBS), poly(butylene succinate/adipate) (PBSA), poly(butylene adipate/terephthalate) (PBAT), poly(butylene succinate/carbonate), polyethylene terephthalate copolymer, polyethylene terephthalate/succinate), poly(tetramethylene adipate/terephthalate), polyethylene succinate, polyvinyl alcohol, polyglycolic acid and glycolic acid/caprolactone copolymers; resins for which the raw materials are partly from biomass, such as (polylactic acid/polybutylene succinate-based) block copolymers, (polylactic acid/polycaprolactone) copolymers, (polylactic acid/polyether) copolymers, polylactic acid-blended PBAT, lactic acid/glycolic acid copolymers, biopolybutylene succinate, poly(butylene succinate/adipate), starch-blended polyester resins and poly(butylene terephthalate succinate); resins for which the raw materials are 100% biomass, including polyhydroxyalkanoates such as polyhydroxybutyrate, polyhydroxyvalerate, polyhydroxycaprylate, poly(hydroxybutyrate/hydroxyhexanoate) (PHBH), poly(3-hydroxybutylate/4-hydroxybutylate) (P3HB4HB) and poly(hydroxybutyrate/hydroxyvalerate) (PHBV), and also polylactic acid (PLA); and resins from naturally occurring macromolecules such as cellulose, cellulose acetate, cellulose ester resins, starches, esterified starches and chitosan.

Of these, it is preferable to combine a resin which, as a biodegradable resin, has biodegradability in soil or compost but for which the biodegradability in the ocean is poor, such as one which includes biodegradable resin ingredients selected from polycaprolactone, bio(PBS), PBSA, PBAT, poly(tetramethylene adipate/terephthalate), poly(butylene succinate/carbonate), polyhydroxyalkanoates such as PHBH and PHBV, PLA, and resins from naturally occurring macromolecules such as cellulose, starch and chitosan, with the marine biodegradation promoter. The biodegradable resin is more preferably PBSA, PBS, PBAT, PLA or a resin from starch.

Examples of especially preferable combinations of the marine biodegradation promoter of the invention and biodegradable resins include one or more selected from calcium palmitate, calcium stearate, calcium myristoyl sarcosinate, calcium palmitoyl sarcosinate and calcium stearoyl glutamate as the marine biodegradation promoter and one or more selected from PBSA, PBS, PBAT and starch-derived resins as the biodegradable resin.

From the standpoint of reducing the environmental burden, the raw material for the resin which is combined with the marine biodegradation promoter is preferably from biomass, with at least 25% being raw material from biomass, more preferably 50% being raw material from biomass, and most preferably at least 80% being raw material from biomass.

The resin composition of the invention may include a solvent. The solvent may be one which dissolves the resin serving as the matrix while leaving the marine biodegradation promoter undissolved as particles, or may be one which dissolves both the resin and the marine biodegradation promoter. By suitably adjusting these ingredients, the resin combination may be used as a molded body obtained by film formation such as by casting, or as a coating, ink, surface treatment agent or the like. Examples of preferred solvents include water, hexane, heptane, N-methylpyrrolidone, dimethylformamide, dimethylacetamide, dimethylsulfoxide, dimethylsulfone, acetone, methyl ethyl ketone, diethyl ketone, acetophenone, dimethyl ether, dipropyl ether, tetrahydrofuran, chloroform, methylene chloride, trichloroethylene, ethylene dichloride, dichloroethane, tetrachloroethane, chlorobenzene, methanol, ethanol, n-propanol, isopropanol, butanol, pentanol, methyl glycol, methyl triglycol, hexyl glycol, phenyl glycol, ethylene glycol, propylene glycol, phenol, cresol, polyethylene glycol, benzene, toluene and xylene. One of these may be used alone or two or more may be used in admixture.

When using a solvent, the combined concentration of resin and marine biodegradation promoter in the resin composition is preferably from 0.5 to 90 wt%, more preferably from 1 to 80 wt%, even more preferably from 5 to 60 wt%, and most preferably from 10 to 50 wt%. The proportion of marine biodegradation promoter relative to the resin, expressed as a weight ratio, is preferably from 99:1 to 10:90, more preferably from 97:3 to 40:60, even more preferably from 95:5 to 50:50, and most preferably from 90:10 to 60:40.

The resin composition of the invention need not include a solvent. In this case, the resin may be melted under applied heat and marine biodegradation promoter that does not melt therein may be added and mixed with the molten resin, or the resin and the marine biodegradation promoter may both be melted and mixed together.

The content of marine biodegradation promoter within the resin composition of the invention is from 1 to 50 wt%, and the resin content is from 50 to 99 wt%. However, in order to efficiently exhibit the advantageous effects of the marine biodegradation promoter of the invention, the marine biodegradation promoter content is more preferably from 3 to 50 wt%, even more preferably from 5 to 45 wt%, still more preferably from 7 to 40 wt%, and most preferably from 10 to 35 wt%. The resin content is more preferably from 50 to 97 wt%, even more preferably from 55 to 95 wt%, still more preferably from 40 to 93 wt%, and most preferably from 65 to 90 wt%. Inclusion of the marine biodegradation promoter within this range enables it to be utilized as a marine biodegradation promoter that accelerates biodegradation in seawater while maintaining the properties of the biodegradable resin.

The resin composition of the invention may optionally include additives such as antioxidants, parting agents, release agents, surface modifiers, hydrophobizing agents, water repelling agents, hydrophilizing agents, dyes and pigments, colorants, heat stabilizers, light stabilizers, weatherability enhancers, antistatic agents, anti-fogging agents, lubricants, anti-blocking agents, hardeners, softeners, compatibilizers, flame retardants, flow enhancers, plasticizers, dispersants, antimicrobial agents, fillers and metal inactivators. The content of these additives, although not particularly limited so long as there is no loss in the advantageous effects of the invention, is preferably from about 0.1 to about 50 parts by weight per 100 parts by weight of the resin.

In cases where the resin composition includes a solvent, the composition may be prepared by, for example, adding the resin, the marine biodegradation promotor and the optional additives to the solvent at the same time or in any suitable order and mixing. Alternatively, in cases where the resin composition does not include a solvent, the resin may be melted and the marine biodegradation promoter and the optional additives may be added thereto, either at the same time or in any suitable order, and mixed; or the resin and the marine biodegradation promoter may be heated, melted together and mixed, and the optional additives then added and mixed therewith.

[Molded Body]

A molded body composed of the marine biodegradation promoter dispersed or dissolved in the resin can be obtained by molding the resin composition. When the resin composition includes a solvent, molding may be carried out using the resin composition directly as is. When the resin composition does not include a solvent, the resin within the resin composition, or both the resin and the marine biodegradation promoter, may be melted by applying heat and molding subsequently carried out.

The molded body may be in the shape of a film, fibers, a sheet or an expansion-molded body, or may have some other shape according to the intended use. The molding method is not particularly limited; use can be made of various methods known to the art. Examples of such methods include blow molding, injection molding, extrusion, compression molding, melt extrusion, film casting and calendering.

EXAMPLES

Synthesis Examples, Examples and Comparative Examples are given below by way of illustration, although the invention is not limited by these Examples. The particle size distributions and volume mean particle sizes (MV) in the Examples and Comparative Examples were measured using the MICROTRACK MT3000 (MicrotracBEL Corp.).

[Synthesis Example 1] Preparation of Propylene Glycol Monostearate Derivative A

A 2,000 mL reactor was charged with 240.0 g of propyl glycol monostearate, 77.2 g of succinic anhydride, 83.7 g of sodium carbonate and 500.0 g of acetonitrile, and the reactor contents were stirred for 4 hours at 60°C. After stirring, the system was cooled to room temperature and precipitate was removed by filtration. The resulting filtrate was concentrated using an evaporator and solvent was removed under reduced pressure, giving propyl glycol monostearate derivative A in which one end group was substituted with -COONa.

[Synthesis Example 2] Preparation of Stearyl Alcohol Derivative B

A 2,000 mL reactor was charged with 150.0 g of stearyl alcohol, 61.1 g of succinic anhydride, 64.6 g of sodium carbonate and 500.0 g of acetonitrile, and the reactor contents were stirred for 4 hours at 60°C. After stirring, the system was cooled to room temperature and the precipitate was removed by filtration. The resulting filtrate was concentrated using an evaporator and solvent was removed under reduced pressure, giving stearyl alcohol derivative A in which one end group was substituted with -COONa.

[Example 1-1] Production of Calcium Palmitate Particles (A1 Particles)

A 5,000 mL reactor was charged with the ingredients shown below and the ingredients were stirred at 70°C with a stirrer, effecting dissolution

| | |
|---|---|
| Potassium palmitate | 250.0 g |
| Deionized water | 2,875.0 g |

Next, 1,000.0 g of a 20.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried, giving the target A1 particles. The A1 particles were examined with a scanning electron microscope (SEM) to ascertain their shape, whereupon they were found to be flaky particles. The volume mean particle diameter (MV) of the A1 particles was 58 $\mu$m.

[Example 1-2] Production of Calcium Myristoyl Sarcosinate Particles (A2 Particles)

A 5,000 mL reactor was charged with the ingredients shown below and the ingredients were stirred at 60°C with a stirrer, effecting dissolution

| | |
|---|---|
| Sodium myristoyl sarcosinate | 250.0 g |

(continued)

| | |
|---|---|
| Deionized water | 2,250.0 g |

Next, 1,000.0 g of a 20.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried, giving the target A2 particles. The A2 particles were examined with a SEM to ascertain their shape, whereupon they were found to be flaky particles. The MV of the A2 particles was 96 $\mu$m.

[Example 1-3] Production of Calcium Myristoyl Glutamate Particles (A3 Particles)

A 5,000 mL reactor was charged with the ingredients shown below and the ingredients were stirred at 60°C with a stirrer, effecting dissolution.

| | |
|---|---|
| Sodium myristoyl glutamate | 70.0 g |
| Deionized water | 2,730.0 g |

Next, 350.0 g of a 15.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried, giving the target A3 particles. The A3 particles were examined with a SEM to ascertain their shape, whereupon they were found to be flaky particles. The MV of the A3 particles was 79 $\mu$m.

[Example 1-4] Production of Magnesium Dodecanesulfonate Particles (A4 Particles)

A 3,000 mL reactor was charged with the ingredients shown below and the ingredients were stirred at 40°C with a stirrer, effecting dissolution.

| | |
|---|---|
| Sodium dodecanesulfonate | 150.0 g |
| Deionized water | 600.0 g |

Next, 1,000.0 g of a 20.0 wt% aqueous solution of magnesium chloride was added dropwise under stirring, thereby carrying out a magnesium substitution reaction and causing particles to settle out. Following the completion of stirring, filtration and washing were repeatedly carried out using deionized water and the particles were dried, giving the target A4 particles. The A4 particles were examined with a SEM to ascertain their shape, whereupon they were found to be flaky particles. The MV of the A4 particles was 41 $\mu$m.

[Example 1-5] Production of Aluminum Myristate Particles (A5 Particles)

A 5,000 mL reactor was charged with the ingredients shown below and the ingredients were stirred at 50°C with a stirrer, effecting dissolution.

| | |
|---|---|
| Sodium myristate | 250.0 g |
| Deionized water | 2,875.0 g |

Next, 1,250.0 g of a 10.0 wt% aqueous solution of aluminum sulfate was added dropwise under stirring, thereby carrying out an aluminum substitution reaction and causing particles to settle out. Following the completion of stirring, filtration and washing were repeatedly carried out using deionized water and the particles were dried, giving the target A5 particles. The A5 particles were examined with a SEM to ascertain their shape, whereupon they were found to be flaky particles. The MV of the A5 particles was 68 $\mu$m.

[Example 1-6] Production of Calcium Propylene Glycol Monostearate Derivative Particles (A6 Particles)

A 3,000 mL reactor was charged with the ingredients shown below and the ingredients were stirred at 60°C with a stirrer, effecting dissolution.

| Propylene glycol monostearate derivative A | 120.0 g |
|---|---|
| Deionized water | 1,104.0 g |
| Ethanol | 276.0 g |

Next, 600.0 g of a 20.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried, giving the target A6 particles. The A6 particles were examined with a SEM to ascertain their shape, whereupon they were found to be flaky particles. The MV of the A6 particles was 164 $\mu$m.

[Example 1-7] Production of Calcium Stearyl Alcohol Derivative Particles (A7 Particles)

A 3,000 mL reactor was charged with the ingredients shown below and the ingredients were stirred at 75°C with a stirrer, effecting dissolution.

| Stearyl alcohol derivative B | 100.0 g |
|---|---|
| Deionized water | 1,140.0 g |
| Ethanol | 760.0 g |

Next, 666.7 g of a 15.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried, giving the target A7 particles. The A7 particles were examined with a SEM to ascertain their shape, whereupon they were found to be flaky particles. The MV of the A7 particles was 147 $\mu$m.

[Comparative Example 1-1] Production of Polymethyl Methacrylate (PMMA) Particles (B1 Particles)

A 2,000 mL flask was charged all at once with the ingredients shown below and spherical polymer particles B1 of PMMA alone having a MV of 5 $\mu$m were produced by the same method as in Comparative Example 1-3 in WO 2016/181877 A1.

| Water | 1,386.5 g |
|---|---|
| Methyl methacrylate | 173.4 g |
| Lauryl peroxide | 8.6 g |
| Polyvinyl pyrrolidone (K-30) | 17.3 g |

[Comparative Example 1-2] Production of Polystyrene (PS) Particles (B2 Particles)

A 2,000 mL flask was charged all at once with the ingredients shown below and a suspension was produced with a dispersion mixer at 1,000 rpm. The resulting suspension was stirred for 8 hours at 80°C on an oil bath and under a stream of nitrogen, giving a PS particle dispersion.

| Water | 1,280.0 g |
|---|---|
| Styrene | 288.0 g |
| Lauryl peroxide | 14.2 g |
| Polyvinyl pyrrolidone (K-30) | 21.6 g |

The resulting particle dispersion was passed through a screen with 200 $\mu$m openings and transferred to a 3,000 mL flask. The particle dispersion that passed through the screen was subjected to centrifugation. This was repeated five times and classification and washing operations were carried out, giving spherical polymer particles B2 of PS alone having an MV of 10 $\mu$m.

[Comparative Example 1-3] Production of Polybutylene Succinate (PBS) Particles (B3 Particles)

Biodegradable resin (PBS, available as FZ-91 from Mitsubishi Chemical Corporation) pellets, 30.0 g, were freeze-dried with liquid nitrogen and crushed with a crusher (Wonder Blender WB-1, from Osaka Chemical Co., Ltd.). The particle size was then adjusted with a sieve. This was repeated, giving B3 particles of PBS alone having an MV of 10 $\mu$m.

[Comparative Example 1-4] Production of Polybutylene Succinate Adipate (PBSA) Particles (B4 Particles)

Biodegradable resin (PBSA, available as FD-9 from Mitsubishi Chemical Corporation) pellets, 30.0 g, were freeze-dried with liquid nitrogen and crushed with a crusher (Wonder Blender WB-1, from Osaka Chemical Co., Ltd.). The particle size was then adjusted on a sieve. This was repeated, giving B4 particles of PBSA alone having an MV of 5 $\mu$m.

[Comparative Example 1-5] Calcium Alginate Particles (B5 Particles)

Spherical beads of calcium alginate (available as Flavikafine® from Nisshinbo Chemical Inc.; MV = 20 $\mu$m) were used as the B5 particles.

[3] Measurement of Basic Properties

[Examples 2-1 to 2-7, Comparative Examples 2-1 to 2-5]

The melting temperature and contact angle for each of the marine biodegradation promoters were measured by the following methods. The results are shown in Table 1.

[Measurement of Melting Temperature]

The melting temperature was measured using a differential scanning calorimeter (DSC 6200, from Seiko Instruments Inc.). Specifically, a 10 mg specimen was precisely weighed, the weighed specimen was placed in an aluminum pan and, using an empty aluminum pan as the reference, temperature ramp-up at a rate of 10°C/min was carried out over a temperature range of 20°C to 200°C. The glass transition temperature (Tg) was calculated from the resulting reversing heat flow curve. That is, the midpoint of the straight line connecting the points of intersection at each tangent of the endothermic curve to the baseline was determined, and this was treated as Tg. The endothermic (melting) peak point on the resulting curve was computed as the melting temperature.

[Measurement of Contact Angle]

The particles obtained in the respective Examples were molded with a hot press set at or above the respective melting temperatures so as to produce a 200 $\mu$m thick film. Next, based on JISR 3257, a droplet of pure water was placed on the surface of the film thus produced and the contact angle of pure water was measured using a contact angle meter (Drop Master 300, from Kyowa Interface Science Co., Ltd.).

[Table 1]

|  | Particles (ingredients) | MV ($\mu$m) | Melting temperature (°C) | Contact angle (°) |
|---|---|---|---|---|
| Example 2-1 | A1 particles (Ca palmitate particles) | 58 | 153 | 117 |
| Example 2-2 | A2 particles (Ca myristoyl sarcosinate particles) | 96 | 76 | 98 |
| Example 2-3 | A3 particles (Ca myristoyl glutamate particles) | 79 | 115 | 120 |
| Example 2-4 | A4 particles (Mg dodecanesulfonate particles) | 41 | 172 | 96 |
| Example 2-5 | A5 particles (Al myristate particles) | 187 | 161 | 118 |

(continued)

| | Particles (ingredients) | MV (μm) | Melting temperature (°C) | Contact angle (°) |
|---|---|---|---|---|
| Example 2-6 | A6 particles (Ca propylene glycol monostearate derivative particles) | 164 | 68 | 105 |
| Example 2-7 | A7 particles (Ca stearoyl alcohol derivative particles) | 147 | 132 | 110 |
| Comparative Example 2-1 | B1 particles (PMMA particles) | 5 | 93 | 83 |
| Comparative Example 2-2 | B2 particles (PS particles) | 10 | 98 | 103 |
| Comparative Example 2-3 | B3 particles (PBS particles) | 10 | 117 | 70 |
| Comparative Example 2-4 | B4 particles (PBSA particles) | 5 | 86 | 68 |
| Comparative Example 2-5 | B5 particles (Ca alginate particles) | 20 | none | 0 |

[4] Solubility Test 1

[Examples 3-1 to 3-7, Comparative Examples 3-1 to 3-5]

The particles in the respective Examples, in amounts of 1.0 g, were dispersed in water or an aqueous solution of sodium chloride (sodium chloride concentration, 3 wt%) to a concentration in each case of 0.1 wt%, and solubility tests were carried out. The results are shown in Table 2.

| | |
|---|---|
| (1) Appearance: | The condition when 15 days had elapsed following dispersion was visually checked. |
| (2) Shape: | Changes in shape when 15 days had elapsed following dispersion in an aqueous solution of sodium chloride, as compared with the shape prior to the test, were checked by measuring the particle size distribution. |
| (3) Transmittance: | Letting SD1 be the percent transmittance of 560 nm wavelength light by a dispersion 15 days after preparation by dispersing the particles in an aqueous solution of sodium chloride and letting WD1 be the percent transmittance of 560 nm wavelength light by a dispersion 24 hours after preparation by dispersing the particles in water, the ratio WD1/SD1 was calculated. The transmittances were measured using a UV-visible spectrophotometer (UV-2450, from JASCO Corporation). |

[Table 2]

| | Particles | Appearance | | Shape | SD1 | WD1 | WD1/SD1 |
|---|---|---|---|---|---|---|---|
| | | Water | Aqueous sodium chloride solution | | | | |
| Example 3-1 | A1 particles | cloudy | translucent | changed | 80 | 45 | 0.56 |
| Example 3-2 | A2 particles | cloudy | clear | changed | 90 | 36 | 0.40 |
| Example 3-3 | A3 particles | cloudy | clear | changed | 85 | 40 | 0.47 |
| Example 3-4 | A4 particles | cloudy | clear | changed | 71 | 34 | 0.48 |
| Example 3-5 | A5 particles | cloudy | clear | changed | 77 | 35 | 0.45 |
| Example 3-6 | A6 particles | cloudy | clear | changed | 73 | 28 | 0.38 |

16

(continued)

| | Particles | Appearance | | Shape | SD1 | WD1 | WD1/SD1 |
| | | Water | Aqueous sodium chloride solution | | | | |
|---|---|---|---|---|---|---|---|
| Example 3-7 | A7 particles | cloudy | translucent | changed | 78 | 31 | 0.40 |
| Comparative Example 3-1 | B1 particles | cloudy | cloudy | unchanged | 48 | 47 | 0.98 |
| Comparative Example 3-2 | B2 particles | cloudy | cloudy | unchanged | 52 | 51 | 0.98 |
| Comparative Example 3-3 | B3 particles | cloudy | cloudy | unchanged | 46 | 46 | 1.00 |
| Comparative Example 3-4 | B4 particles | cloudy | cloudy | unchanged | 50 | 50 | 1.00 |
| Comparative Example 3-5 | B5 particles | cloudy | clear | changed | 91 | 12 | 0.13 |

[5] Solubility Test 2

[Examples 4-1 to 4-7, Comparative Examples 4-1 to 4-5]

The particles in the respective Examples, in amounts of 1.0 g, were dispersed in water or an aqueous solution of sodium chloride (sodium chloride concentration, 3 wt%) to concentrations in each case of 0.1 wt%, and stirred for 15 days at room temperature. Each dispersion was then suction filtered and washed with warm water using a membrane filter, the residue on the filter was dried to a constant weight in a vacuum desiccator, and the weight was measured.

Letting A be the weight before the test and B be the weight after drying, the percent weight loss was determined as (A-B)/A $\times$ 100. Letting W be the percent weight loss in water and S be the percent weight loss in the aqueous solution of sodium chloride, the degree of dissolution or hydrophilization Z was determined as Z = S-W.

The results are shown in Table 3.

[Table 3]

| | Particles | W | S | Z |
|---|---|---|---|---|
| Example 4-1 | A1 particles | 1.5 | 87.8 | 86.3 |
| Example 4-2 | A2 particles | 2.8 | 96.5 | 93.7 |
| Example 4-3 | A3 particles | 1.9 | 93.9 | 92.0 |
| Example 4-4 | A4 particles | 2.7 | 89.6 | 86.9 |
| Example 4-5 | A5 particles | 3.3 | 80.7 | 77.4 |
| Example 4-6 | A6 particles | 1.8 | 909 | 89.1 |
| Example 4-7 | A7 particles | 2.6 | 89.2 | 86.6 |
| Comparative Example 4-1 | B1 particles | 1.2 | 1.5 | 0.3 |
| Comparative Example 4-2 | B2 particles | 1.3 | 1.6 | 0.3 |
| Comparative Example 4-3 | B3 particles | 2.1 | 2.2 | 0.1 |
| Comparative Example 4-4 | B4 particles | 2.5 | 3.5 | 1.0 |
| Comparative Example 4-5 | B5 particles | 3.9 | 95.9 | 92.0 |

[6] Solubility Test 1 in Molded Resin Articles

[Examples 5-1 to 5-7, Comparative Examples 5-1 to 5-5]

The particles in the respective Examples (Particles A1 to A7, Particles B1 to B5) were kneaded at 140°C with the biodegradable resin PBSA (FD-92, from Mitsubishi Chemical Corporation) to a concentration of 20 wt%, and the kneaded material was pressed at 150°C to produce in each case a 150 μm thick film (Examples 5-1 to 5-6, Comparative Examples 5-1 to 5-4). In addition, PBSA alone (containing no particles) was pressed at 150°C to produce a 150 μm thick film (Comparative Example 5-5).

The presence or absence of the particle shapes within the film and the contact angle measurement results for the produced films are shown in Table 3. The presence or absence of particle shapes was determined by visual examination, and the contact angles were measured by the method described above in "[3] Measurement of Basic Properties."

The resulting films were cut into 10 mm squares, which were placed in 200 mL of deionized water or 200 mL of a 3 wt% aqueous solution of sodium chloride and left at rest for 15 days or 45 days at 25°C. The film was then taken out and the film surface and appearance were examined with a scanning electron microscope.

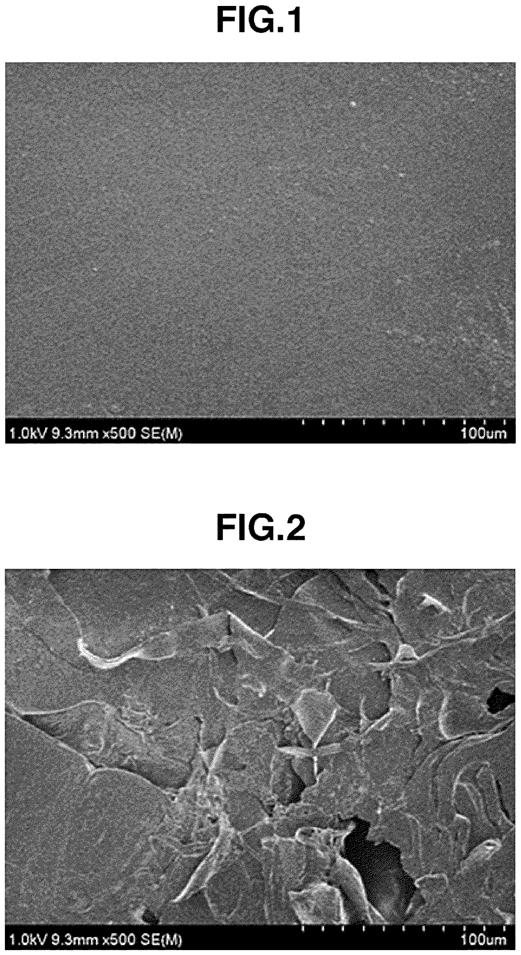

The results are shown in Table 4. FIGS. 1 and 2 respectively show SEM images of the film in Example 5-2 after 45 days of immersion in water and after 45 days of immersion in a 3 wt% aqueous solution of sodium chloride.

[Table 4]

| | Particles | Water | | Aqueous sodium chloride solution | | Particles present/ absent after molding | Contact angle (°) |
|---|---|---|---|---|---|---|---|
| | | 15 days | 45 days | 15 days | 45 days | | |
| Example 5-1 | A1 particles | unchanged | unchanged | surface changed | surface became uneven | absent | 93 |
| Example 5-2 | A2 particles | unchanged | unchanged | surface changed | surface became uneven | absent | 89 |
| Example 5-3 | A3 particles | unchanged | unchanged | surface changed | surface became uneven | absent | 105 |
| Example 5-4 | A4 particles | unchanged | unchanged | surface changed | surface became uneven | absent | 87 |
| Example 5-5 | A5 particles | unchanged | unchanged | surface changed | surface became uneven | absent | 94 |
| Example 5-6 | A6 particles | unchanged | unchanged | surface changed | surface became uneven | absent | 90 |
| Example 5-7 | A7 particles | unchanged | unchanged | surface changed | surface became uneven | absent | 92 |
| Comparative Example 5-1 | B1 particles | unchanged | unchanged | unchanged | unchanged | absent | 71 |
| Comparative Example 5-2 | B2 particles | unchanged | unchanged | unchanged | unchanged | absent | 88 |
| Comparative Example 5-3 | B3 particles | unchanged | unchanged | unchanged | unchanged | absent | 69 |

(continued)

| | Particles | Water | | Aqueous sodium chloride solution | | Particles present/ absent after molding | Contact angle (°) |
|---|---|---|---|---|---|---|---|
| | | 15 days | 45 days | 15 days | 45 days | | |
| Comparative Example 5-4 | B5 particles | film swelled | film swelled | film swelled | holes formed/ surface became uneven | present | 20 |
| Comparative Example 5-5 | none | unchanged | unchanged | unchanged | unchanged | - | 66 |

[7] Solubility Test 2 in Molded Resin Articles

[Examples 6-1 to 6-7, Comparative Examples 6-1 to 6-5]

Aside from changing the biodegradable resin to PBS (FZ-91, from Mitsubishi Chemical Corporation), test films were produced in the same way as in "[5] Solubility Test 1 in Molded Resin Articles" (Examples 6-1 to 6-7, Comparative Examples 6-1 to 6-4). For the sake of comparison, a resin film containing no particles was also produced (Comparative Example 6-5).

The presence or absence of particle shapes within the film and the contact angle measurement results for the produced films are shown in Table 4. The presence or absence of particle shapes was visually checked, and the contact angles were measured by the method described above in "[3] Measurement of Basic Properties."

The resulting films were cut into 10 mm squares, which were placed in 200 mL of deionized water or 200 mL of a 3 wt% aqueous solution of sodium chloride and left at rest for 15 days or 45 days at 25°C. The films was then taken out and the film surface and appearance were examined with a scanning electron microscope.

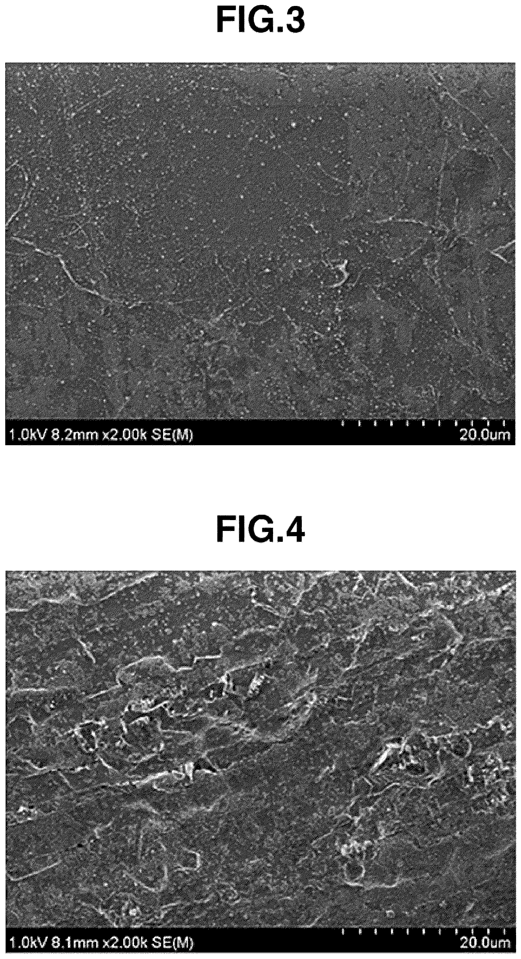

The results are shown in Table 5. FIGS. 3 and 4 respectively show SEM images of the film in Example 6-3 after 45 days of immersion in water and after 45 days of immersion in a 3 wt% aqueous solution of sodium chloride.

[Table 5]

| | Particles | Water | | Aqueous sodium chloride solution | | Particles present/ absent after molding | Contact angle (°) |
|---|---|---|---|---|---|---|---|
| | | 15 days | 45 days | 15 days | 45 days | | |
| Example 6-1 | A1 particles | unchanged | unchanged | surface changed | surface became uneven | absent | 96 |
| Example 6-2 | A2 particles | unchanged | unchanged | surface changed | surface became uneven | absent | 92 |
| Example 6-3 | A3 particles | unchanged | unchanged | surface changed | surface became uneven | absent | 106 |
| Example 6-4 | A4 particles | unchanged | unchanged | surface changed | surface became uneven | absent | 87 |
| Example 6-5 | A5 particles | unchanged | unchanged | surface changed | surface became uneven | absent | 98 |

(continued)

|  | Particles | Water | | Aqueous sodium chloride solution | | Particles present/ absent after molding | Contact angle (°) |
|---|---|---|---|---|---|---|---|
|  |  | 15 days | 45 days | 15 days | 45 days |  |  |
| Example 6-6 | A6 particles | unchanged | unchanged | surface changed | surface became uneven | absent | 91 |
| Example 6-7 | A7 particles | unchanged | unchanged | surface changed | surface became uneven | absent | 94 |
| Comparative Example 6-1 | B1 particles | unchanged | unchanged | unchanged | unchanged | absent | 73 |
| Comparative Example 6-2 | B2 particles | unchanged | unchanged | unchanged | unchanged | absent | 89 |
| Comparative Example 6-3 | B4 particles | unchanged | unchanged | unchanged | unchanged | absent | 70 |
| Comparative Example 6-4 | B5 particles | film swelled | film swelled | film swelled | holes formed/ surface became uneven | present | 23 |
| Comparative Example 6-5 | none | unchanged | unchanged | unchanged | unchanged | - | 67 |

[8] Biodegradability Test on Powder

[Examples 7-1 to 7-3, Comparative Examples 7-1 to 7-3]

A seawater biodegradability test was performed by the following method on Particles A1 to A3 and Particles B1 to B3. The degree of biodegradation relative to cellulose was evaluated using microcrystalline cellulose (Avicel PH-101, from Sigma-Aldrich Co.) as the control. The results are shown in Table 6.

<Test Method and Conditions>

| | |
|---|---|
| Method of Measuring Degree of Biodegradation: | The oxygen consumption was measured with a closed respirometer (see ASTM D6691) |
| Test Apparatus: | OxiTop IDS (WTW) |
| Incubation Temperature: | 30±1°C, in the dark |

$$\text{Degree of Biodegradation (\%)} = (BOD_O - BOD_B) / ThOD \times 100$$

$BOD_O$: Biochemical oxygen demand in test or inoculum activity verification (measured value in mg)
$BOD_B$: Average biochemical oxygen demand in blank test (measured value in mg)
$ThOD$: Theoretical oxygen demand required when test material or control material has completely oxidized (calculated value in mg)

$$\text{Degree of Biodegradation Relative to Cellulose (\%)} =$$

$$\text{(maximum degree of biodegradation of test particles} /$$

$$\text{maximum degree of biodegradation of cellulose)} \times 100$$

Seawater (collected from Tokyo Bay [Port of Chiba in Chiba Prefecture])

Foreign matter was removed from the sampled seawater with a 10 $\mu$m filter, after which the seawater was aerated at room temperature (25°C). The following were added as inorganic nutrients: 0.05 g/L of ammonium chloride and 0.1 g/L of potassium dihydrogen phosphate.

[Table 6]

| | Particles | Degree of biodegradation (%) | | | | | | | | Degree of biodegradation (maximum value) | Degree of degradation relative to cellulose |
|---|---|---|---|---|---|---|---|---|---|---|---|
| | | 7 days | 14 days | 21 days | 28 days | 35 days | 42 days | 49 days | 56 days | | |
| Example 7-1 | A1 particles | 25 | 36 | 48 | 60 | 62 | 64 | 65 | 65 | 65 | 100 |
| Example 7-2 | A2 particles | 45 | 58 | 63 | 65 | 66 | 66 | 66 | 66 | 66 | 101 |
| Example 7-3 | A3 particles | 36 | 42 | 56 | 63 | 63 | 64 | 64 | 64 | 64 | 98 |
| Comparative Example 7-1 | B1 particles | 0 | 0 | 0 | 1 | 1 | 2 | 3 | 3 | 3 | 4.6 |
| Comparative Example 7-2 | B2 particles | 0 | 0 | 0 | 0 | 0 | 0 | 1 | 1 | 1 | 1.5 |
| Comparative Example 7-3 | B3 particles | 0 | 0 | 1 | 1 | 3 | 4 | 5 | 5 | 5 | 7.7 |
| Control material | cellulose | 28 | 42 | 56 | 58 | 60 | 65 | 65 | 65 | 65 | - |

From the results shown in Table 6, Particles A1 to A3 had substantially the same degree of biodegradability as cellulose during incubation periods of up to 56 days.

[9] Confirmation Test 1 in Seawater (Weight Loss)

[Examples 8-1 to 8-10, Comparative Examples 8-1 to 8-6]

Particles A1, A2 and B1 were added in amounts of 3 wt%, 5 wt%, 10 wt%, 20 wt% or 30 wt% to the biodegradable resin PBSA (FD-92, from Mitsubishi Chemical Corporation), and the mixture in each Example was kneaded at 140°C and pressed at 150°C to produce a 200 μm thick film. In addition, as a blank, PBSA alone (containing no particles) was pressed at 150°C to produce a 200 μm thick film (Comparative Example 8-6).
The resulting film was cut into 20 mm squares, each of which was inserted between layers of stainless steel netting, immersed in seawater (sampled from Tokyo Bay (Port of Chiba in Chiba Prefecture)) that had been placed in a 40 L water tank, and the weight loss over time after 30 days, 60 days and 90 days of immersion was examined. The results are shown in Table 7.

[Table 7]

|  | Particles | Amount added (wt%) | Period of immersion and percent weight loss (%) | | |
|---|---|---|---|---|---|
|  |  |  | 30 days | 60 days | 90 days |
| Example 8-1 | A1 particles | 3 | 5 | 11 | 17 |
| Example 8-2 | A1 particles | 5 | 10 | 21 | 30 |
| Example 8-3 | A1 particles | 10 | 19 | 32 | 45 |
| Example 8-4 | A1 particles | 20 | 24 | 38 | 53 |
| Example 8-5 | A1 particles | 30 | 30 | 48 | 65 |
| Example 8-6 | A2 particles | 3 | 6 | 15 | 23 |
| Example 8-7 | A2 particles | 5 | 12 | 21 | 40 |
| Example 8-8 | A2 particles | 10 | 20 | 35 | 53 |
| Example 8-9 | A2 particles | 20 | 28 | 43 | 58 |
| Example 8-10 | A2 particles | 30 | 36 | 50 | 72 |
| Comparative Example 8-1 | B1 particles | 3 | 0.1 | 2 | 5 |
| Comparative Example 8-2 | B1 particles | 5 | 0.2 | 3 | 7 |
| Comparative Example 8-3 | B1 particles | 10 | 0.5 | 5 | 8 |
| Comparative Example 8-4 | B1 particles | 20 | 1 | 6 | 8 |
| Comparative Example 8-5 | B1 particles | 30 | 1 | 7 | 10 |
| Comparative Example 8-6 | none | - | 0.1 | 1 | 6 |

From the results shown in Table 6, it appears that, concurrent with disintegration by seawater, biodegradability is accelerated owing to the presence of microorganisms in the seawater.

[9] Confirmation Test 2 in Seawater (Biodegradability Test)

[Examples 9-1 to 9-10, Comparative Examples 9-1 to 9-5]

Each of the films obtained in "[8] Confirmation Test 1 in Seawater" was freeze-dried in liquid nitrogen, subsequently crushed with a crusher (Wonder Blender WB-1, from Osaka Chemical Co., Ltd.) and, using a commercially available sieve, crushed particles of each type having an MV of 10 μm were produced. A seawater biodegradation test was performed on each of the resulting types of crushed particles by the following method. In addition, using PBSA alone (containing no particles) as the blank, the degree of biodegradation relative to this blank was evaluated. The results are shown in Table 8.

<Test Method and Conditions>

| Method of Measuring Degree of Biodegradation: | The oxygen consumption was measured with a closed respirometer (see ASTM D6691) |
|---|---|
| Test Apparatus: | OxiTop IDS (WTW) |
| Incubation Temperature: | $30 \pm 1°C$, in the dark |

$$\text{Degree of Biodegradation (\%)} = (BOD_O - BOD_B) / ThOD \times 100$$

$BOD_O$: Biochemical oxygen demand in test or inoculum activity verification (measured value in mg)

$BOD_B$: Average biochemical oxygen demand in blank test (measured value in mg)

ThOD: Theoretical oxygen demand required when test material or control material has completely oxidized (calculated value in mg)

$$\text{Degree of Biodegradation Relative to Cellulose (\%)} =$$

$$(\text{maximum degree of biodegradation of test particles} /$$

$$\text{maximum degree of biodegradation of cellulose}) \times 100$$

Seawater (collected from Tokyo Bay [Port of Chiba in Chiba Prefecture])

Foreign matter was removed from sampled seawater with a 10 $\mu$m filter, after which the seawater was aerated at room temperature (25°C). The following were added as inorganic nutrients: 0.05 g/L of ammonium chloride and 0.1 g/L of potassium dihydrogen phosphate.

[Table 8]

| | Particles (amount added) | Degree of biodegradation (%) | | | | | | | | Degree of biodegradation (maximum value) | Degree of degradation relative to PBSA |
|---|---|---|---|---|---|---|---|---|---|---|---|
| | | 7 days | 14 days | 21 days | 28 days | 35 days | 42 days | 49 days | 56 days | | |
| Example 9-1 | A1 particles (3 wt%) | 0 | 2 | 5 | 14 | 18 | 18 | 17 | 18 | 18 | 360 |
| Example 9-2 | A1 particles (5 wt%) | 1 | 2 | 6 | 16 | 21 | 22 | 22 | 20 | 22 | 440 |
| Example 9-3 | A1 particles (10 wt%) | 1 | 2 | 7 | 20 | 26 | 26 | 26 | 26 | 26 | 520 |
| Example 9-3 | A1 particles (20 wt%) | 1 | 2 | 8 | 22 | 30 | 32 | 31 | 30 | 32 | 640 |
| Example 9-3 | A1 particles (30 wt%) | 1 | 2 | 9 | 28 | 39 | 38 | 39 | 39 | 39 | 780 |
| Example 9-3 | A2 particles (3 wt%) | 1 | 1 | 12 | 17 | 20 | 20 | 21 | 20 | 20 | 400 |
| Example 9-3 | A2 particles (5 wt%) | 2 | 4 | 16 | 23 | 27 | 28 | 27 | 28 | 28 | 560 |
| Example 9-3 | A2 particles (10 wt%) | 2 | 7 | 19 | 28 | 35 | 36 | 36 | 37 | 37 | 740 |
| Example 9-3 | A2 particles (20 wt%) | 4 | 10 | 22 | 31 | 40 | 40 | 39 | 40 | 40 | 800 |
| Example 9-3 | A2 particles (30 wt%) | 4 | 14 | 30 | 48 | 54 | 53 | 54 | 54 | 54 | 1,080 |

| | Particles (amount added) | Degree of biodegradation (%) | | | | | | | | Degree of biodegradation (maximum value) | Degree of degradation relative to PBSA |
|---|---|---|---|---|---|---|---|---|---|---|---|
| | | 7 days | 14 days | 21 days | 28 days | 35 days | 42 days | 49 days | 56 days | | |
| Comparative Example 9-1 | B1 particles (3 wt%) | 0 | 0 | 0 | 1 | 1 | 1 | 2 | 2 | 2 | 4.6 |
| Comparative Example 9-2 | B1 particles (5 wt%) | 0 | 0 | 0 | 0 | 0 | 0 | 0 | 1 | 1 | 1.5 |
| Comparative Example 9-3 | B1 particles (10 wt%) | 0 | 0 | 0 | 0 | 0 | 0 | 0 | 0 | 0 | 0 |
| Comparative Example 9-4 | B1 particles (20 wt%) | 0 | 0 | 0 | 0 | 0 | 0 | 0 | 0 | 0 | 0 |
| Comparative Example 9-5 | B1 particles (30 wt%) | 0 | 0 | 0 | 0 | 0 | 0 | 0 | 0 | 0 | 0 |
| Blank | PBSA | 0 | 0 | 1 | 1 | 2 | 3 | 4 | 5 | 5 | - |

The results shown in Table 8 demonstrate that the marine biodegradation promoter of the invention achieves the advantageous effects of increasing the overall biodegradability and also of promoting the biodegradability of biodegradable resins in seawater.

From the above results, the marine biodegradation promoter of the invention maintains hydrophobicity in fresh water, yet in seawater it readily dissolves or becomes hydrophilic earlier than biodegradable resins by breaking up into smaller molecules due to biodegradation or by incurring salt substitution. Hence, by adding the inventive marine biodegradation promoter to a resin composition having biodegradability in soil/compost or to a mixed composition having weak biodegradability in the ocean, the composition becomes porous in seawater, helping microorganisms to adhere and working to accelerate biodegradation, ultimately making it possible to increase the marine biodegradability of the overall composition and reduce the burden on the environment.

**Claims**

1. A marine biodegradation promoter that is a hydrophobic thermoplastic powder comprising a compound in which a monovalent organic anion originating from a substance selected from the group consisting of monovalent carboxylic acids having a monovalent hydrocarbon group of 10 to 25 carbon atoms, monovalent sulfonic acids having a monovalent hydrocarbon group of 10 to 25 carbon atoms, monovalent sulfate esters having a monovalent hydrocarbon group of 10 to 25 carbon atoms and monovalent phosphate esters having a monovalent hydrocarbon group of 10 to 25 carbon atoms is ionically bonded with a metal cation having a valence of two or more,
   wherein the powder dissolves in a 3 wt% aqueous solution of sodium chloride or exhibits hydrophilicity in a 3 wt% aqueous solution of sodium chloride.

2. The marine biodegradation promoter of claim 1, wherein the monovalent organic anion is from a monovalent carboxylic acid.

3. The marine biodegradation promoter of claim 2, wherein the monovalent carboxylic acid is a monovalent fatty acid having a monovalent hydrocarbon group of 10 to 25 carbon atoms.

4. The marine biodegradation promoter of claim 3, wherein the monovalent carboxylic acid is capric acid, lauric acid, myristic acid, palmitic acid or stearic acid.

5. The marine biodegradation promoter of claim 2, wherein the monovalent carboxylic acid is an amino acid derivative having a monovalent hydrocarbon group of 10 to 25 carbon atoms.

6. The marine biodegradation promoter of claim 5, wherein the amino acid derivative is a sarcosine derivative having a monovalent hydrocarbon group of 10 to 25 carbon atoms or a glutamic acid derivative having a monovalent hydrocarbon group of 10 to 25 carbon atoms.

7. The marine biodegradation promoter of claim 6, wherein the amino acid derivative is lauroyl sarcosine, myristoyl sarcosine, palmitoyl sarcosine, myristoyl glutamate or stearoyl glutamate.

8. The marine biodegradation promoter of any one of claims 1 to 7, wherein the monovalent organic anion is one that does not include a cyclic structure.

9. The marine biodegradation promoter of any one of claims 1 to 8, wherein the monovalent organic anion is one that includes an amide group.

10. The marine biodegradation promoter of any one of claims 1 to 9, wherein the metal cation is a calcium ion, magnesium ion or aluminum ion.

11. The marine biodegradation promoter of any one of claims 1 to 10 which is a powder having an average particle size of from 0.1 to 10,000 μm.

12. The marine biodegradation promoter of any one of claims 1 to 11 which is a thermoplastic powder having a melting temperature of between 60°C and 230°C.

13. The marine biodegradation promoter of any one of claims 1 to 12, wherein a melt-molded body of particles of the powder has a contact angle 30 seconds after a water droplet is deposited thereon of 50° or more.

14. A marine biodegradable resin composition comprising the marine biodegradation promoter of any one of claims 1 to 13 and a resin.

15. The marine biodegradable resin composition of claim 14, wherein the resin is a biodegradable resin.

16. The marine biodegradable resin composition of claim 14 or 15, wherein the content of the marine biodegradation promoter is from 3 to 50 wt% and the content of the biodegradable resin is from 50 to 97 wt%.

17. A molded body obtained from the marine biodegradable resin composition of any one of claims 14 to 16.

# FIG.1

1.0kV 9.3mm x500 SE(M) 100um

# FIG.2

1.0kV 9.3mm x500 SE(M) 100um

# FIG.3

1.0kV 8.2mm x2.00k SE(M)　　　　　20.0um

# FIG.4

1.0kV 8.1mm x2.00k SE(M)　　　　　20.0um

## INTERNATIONAL SEARCH REPORT

| International application No. |
| --- |
| **PCT/JP2021/043924** |

| A. | CLASSIFICATION OF SUBJECT MATTER |
| --- | --- |

*C08K 5/098*(2006.01)i; *C08K 5/42*(2006.01)i; *C08K 5/51*(2006.01)i; *C08L 101/00*(2006.01)i
FI:   C08L101/00; C08K5/098; C08K5/42; C08K5/51

According to International Patent Classification (IPC) or to both national classification and IPC

| B. | FIELDS SEARCHED |
| --- | --- |

Minimum documentation searched (classification system followed by classification symbols)

C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/REGISTRY (STN)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | GONSALVES, K.E. et al. Development of Potentially Degradable Materials for Marine Applications. II. Polypropylene-Starch Blends. Journal of Applied Polymer Science. 1991, vol. 43, issue 2, pp. 405-415, ISSN 1097-4628<br>in particular, synopsis, introduction, table I, H-series, I-series, table II-V, fig. 4, 5 | 1-4, 8, 10-15, 17 |
| X | ALVAREZ-ZEFERINO, Juan C. et al. Degradation of Plastics in Seawater in Laboratory. Open Journal of Polymer Chemistry. 2015, 5, pp. 55-62, ISSN 2165-6681<br>in particular, abstract, 2.1., fig. 4 | 1-4, 8, 11-14, 17 |
| X | JP 2012-205506 A (SHIN ETSU POLYMER CO LTD) 25 October 2012 (2012-10-25)<br>claims, paragraphs [0017], [0021], examples | 14-15, 17 |
| X | JP 2021-95432 A (OJI HOLDINGS CORP) 24 June 2021 (2021-06-24)<br>claims, paragraphs [0018], [0043], examples 1-3, 8, comparative example 3 | 14-17 |
| X | SUBRAMANIAM, Malini et al. Enhanced degradation properties of polypropylene integrated with iron and cobalt stearates and its synthetic application. Journal of Applied Polymer Science. 2018, vol. 135, issue 12, 46028, ISSN 1097-4628<br>in particular, abstract, introduction, table I | 14, 17 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 February 2022** | **15 February 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## EP 4 442 747 A1

**INTERNATIONAL SEARCH REPORT**

International application No.

**PCT/JP2021/043924**

**C. DOCUMENTS CONSIDERED TO BE RELEVANT**

| Category* | Citation of document, with indication, where appropriate, of the relevant passages | Relevant to claim No. |
|---|---|---|
| X | 大武義人ほか, 自然界での低密度ポリエチレンの生分解挙動に学ぶ生分解誘引剤の開発と土木分野への応用, 日本化学会誌, 1996, no. 10, pp. 853-860, ISSN 2185-0925 <br> in particular, 2.3, (OHTAKE, Yoshito et al. Development of Biodegradable LDPE Compound and the Estimation of Its Biodegradability and Its Application to Field of Civil Engineering. NIPPON KAGAKU KAISHI.) | 14, 17 |
| A | GUTIERREZ-VILLARREAL, Mario H. et al. A Comparative Study of the Photodegradation of Two Series of Cyclic Olefin Copolymers. International Journal of Polymer Science. 2017, 1870814/1-1870814/10, ISSN 1687-9430 <br> in particular, 2.1., table 2 | 1-17 |
| A | JP 58-67761 A (NIPPON PAINT CO LTD) 22 April 1983 (1983-04-22) <br> claims, p. 4, lower left column, line 13 to lower right column, line 12, examples | 1-17 |
| E, X | WO 2021/246103 A1 (NISSHINBO HOLDINGS INC) 09 December 2021 (2021-12-09) <br> claims, examples | 1-17 |

Form PCT/ISA/210 (second sheet) (January 2015)

32

INTERNATIONAL SEARCH REPORT
Information on patent family members

International application No.

**PCT/JP2021/043924**

| Patent document cited in search report | | | Publication date (day/month/year) | Patent family member(s) | Publication date (day/month/year) |
|---|---|---|---|---|---|
| JP | 2012-205506 | A | 25 October 2012 | (Family: none) | |
| JP | 2021-95432 | A | 24 June 2021 | (Family: none) | |
| JP | 58-67761 | A | 22 April 1983 | US 4482701 A<br>claims, column 6, line 63 to column 7, line 9, examples<br>US 4499223 A | |
| WO | 2021/246103 | A1 | 09 December 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016181877 A1

**Non-patent literature cited in the description**

- **TAKADA, H.** Current status of microplastics contamination --International trends and countermeasures. *Haikibutsu Shigen Junkan Gakkaishi,* 2018, vol. 29 (4), 261-269

- **EBISUI, A. et al.** Decomposition of biodegradable plastics in seawater. *Suisan Kogaku,* 2003, vol. 40 (2), 143-149